# Europäisches Patentamt

## European Patent Office

## Office européen des brevets

(11) Veröffentlichungsnummer: **0 257 367**
**B1**

(12)

# EUROPÄISCHE PATENTSCHRIFT

(45) Veröffentlichungstag der Patentschrift:
**19.04.89**

(21) Anmeldenummer: **87111209.0**

(22) Anmeldetag: **04.08.87**

(51) Int. Cl.⁴: **F16L 3/08,** F16L 3/00,
F24D 19/02, F16B 7/08,
H02G 3/26

(54) **Lösbare Klemmschelle für Schläuche oder dgl.**

(30) Priorität: **16.08.86 DE 8622078 U**

(43) Veröffentlichungstag der Anmeldung:
**02.03.88 Patentblatt 88/9**

(45) Bekanntmachung des Hinweises auf die Patenterteilung:
**19.04.89 Patentblatt 89/16**

(84) Benannte Vertragsstaaten:
**AT BE CH DE ES FR GB GR IT LI LU NL SE**

(56) Entgegenhaltungen:
**DE-A- 3 034 546**
**GB-A- 1 521 897**

(73) Patentinhaber: **Rittal-Werk Rudolf Loh GmbH & Co. KG,**
**Auf dem Stützelberg, D-6348 Herborn(DE)**

(72) Erfinder: **Münch, Udo, Wetzlarer Strasse 41,**
**D-6348 Sinn(DE)**

(74) Vertreter: **Vogel, Georg, Hermann-Essig-Strasse 35,**
**D-7141 Schwieberdingen(DE)**

**Beschreibung**

Die Erfindung betrifft eine lösbare Klemmschelle für Schläuche, in denen relativ zu ihnen bewegbare Kabel angeordnet sind, mit einem z.B. an eine Wand befestigbaren Grundkörper, der einen angeformten Arm mit einer mit dem Rohr zusammenarbeitenden konkaven Partie besitzt, und einem Bügel mit einer mit dem Rohr zusammenarbeitenden konkaven Partie, der mit dem Arm gelenkig verbunden ist und dessen freies Ende eine Rastkupplung mit Haken besitzt, die mit einer Rastkupplung des Armes lösbar verbindbar ist.

Klemmschellen der eingangs genannten Art sind bekannt. So ist beispielsweise in der DE-U 7 334 806 ein Halter beschrieben, bei dem die Verbindung zwischen dem freien Ende des Bügels und dem freien Ende des Armes mittels zwei gegeneinander gerichteten Haken hergestellt ist. Die Verbindungsstelle befindet sich hierbei oberhalb des Grundkörpers. Solche Klemmschellen werden regelmäßig als Trage- oder Haltekörper für Schläuche, Rohre oder dgl. verwendet, indem der Grundkörper z.B. an eine Wand befestigt und danach der Schlauch in die Klemmschelle eingelegt wird. Nachdem das freie Ende des Bügels mit dem freien Ende des Armes verbunden worden ist, ist regelmäßig ein sicherer Halt des Schlauches in der Klemmschelle gewährleistet. Es ist aber nicht selten der Fall, daß in den Schläuchen an Vorrichtungen angeschlossene Kabel angeordnet sind. Diese Kabel, die ein erhebliches Gewicht aufweisen können, können nachteilig auf die Verbindungselemente der Vorrichtung einwirken.

Es ist Aufgabe der Erfindung, eine Klemmschelle der eingangs genannten Art ohne unangemessenen konstruktiven Aufwand so auszubilden, daß sie in ihrem wirksamen Zustand mit dem Schlauch so verbunden sind, daß die Kabel mit der Vorrichtung praktisch belastungsfrei verbindbar sind.

Die gestellte Aufgabe wird erfindungsgemäß dadurch gelöst, daß seitlich von der konkaven Partie des Armes, in Richtung des Schlauches mindestens ein mit der Klemmschelle fest verbindbares Band zum festen Verbinden mit den Kabeln bei vom Bügel und dem Arm gehaltenem Endstück des Schlauches angeordnet ist.

Man erkennt, daß bei der Erfindung die Verbindung des Schlauches mit der Klemmschelle mindestens durch zwei verschiedene, voneinander unabhängige Haltekörper gebildet ist. Da das Band, das verschiedene Ausführungsformen besitzen kann, die Kabel gegen den Grundkörper drückt, ist auch gewährleistet, daß insbesondere die axialen Bewegungen der Kabel auf den ortsfesten Grundkörper übertragen werden. Somit ist der Bügel, der nur die Verbindung zwischen dem Schlauch und der Klemmschelle verstellt, deutlich entlastet. Entlastet wird dabei insbesondere die Rastkupplung des Bügels, weil die Krafteinwirkungen sowohl von dem Bügel als auch von dem Band aufgenommen werden.

Weitere vorteilhafte und zweckmäßige Maßnahmen der Erfindung gehen aus den Unteransprüchen hervor.

Dadurch, daß in dem Grundkörper Durchbrüche für das Band ausgebildet sind, die zu der konkaven Partie des Armes hin offen sind, kann durch besonders einfache Maßnahmen eine Verbindung zwischen dem Band und dem Grundkörper hergestellt werden, in dem das Band in die Durchbrüche eingefädelt und dann mit dem Rohr verbunden wird. Bei den Durchbrüchen der hier in Rede stehenden Art handelt es sich regelmäßig um solche, deren eines Ende den Kabeln zugewandt ist, während das andere Ende im wandseitigen Bereich des Grundkörpers offen ist.

Um auch in solchen Fällen ein gutes Aufliegen des Grundkörpers an der Wand zu gewährleisten, sieht eine weitere Maßnahme der Erfindung vor, daß in der der Wand zugewandten Partie des Grundkörpers eine Ausnehmung ausgebildet ist, in welche die beiden Durchbrüche ausmünden. Hierbei können die Maßnahmen auch so getroffen sein, daß die Ausnehmung etwa quaderförmig ist, wobei ihre Tiefe größer ist als die Dicke oder Breite des Bandes. Damit wird gewährleistet, daß das Band nur bedingt mit der Wand in Berührung kommt. Aufgrund dieser Anordnung ist sichergestellt, daß die Auflagefläche des Grundkörpers satt an der Wand aufliegen kann.

Eine weitere zweckmäßige Maßnahme der Erfindung sieht vor, daß der Grundkörper im Bereich seiner Rastverbindung eine Ausnehmung besitzt, in der die Haken des Bügels im wirksamen Zustand der Klemmschelle angeordnet sind. Es handelt sich hier also um eine solche Ausbildung des hakenförmigen Endes des Bügels, daß dieser in seinem wirksamen Zustand im Grundkörper versenkt angeordnet ist. Entspricht hierbei die Breite der Ausnehmung etwa der Breite der Haken-Partie des Bügels, dann kann eine Verbindung zwischen dem Haken und dem Grundkörper hergestellt werden, die sicherstellt, daß der Bügel auch die in axialer Richtung des Schlauches wirkenden Kräfte aufnehmen kann, ohne daß sich hierbei die durch die Haken hergestellte Verbindung selbst lösen könnte, da der Bügel diese Kräfte auf den Grundkörper übertragen kann.

Hierbei ist es besonders zweckmäßig, wenn die Haken-Endpartie des Bügels mit dem Grundkörper formschlüssig verbindbar ist. Um auch in solchen Fällen die durch die Haken hergestellte Verbindung ohne weiteres lösen zu können, sieht eine weitere Maßnahme der Erfindung vor, daß im wirksamen Zustand der Klemmschelle zwischen dem freien Ende des Bügels und dem Grundkörper ein Spalt ausgebildet ist. Ist dieser Spalt keilförmig ausgebildet, dann kann diese Verbindung z.B. mittels eines Schraubenziehers ohne weiteres gelöst werden.

Die Verbindung zwischen dem Band und dem Grundkörper kann auch in einer anderen Weise verwirklicht werden. Anstatt der Durchbrüche können Laschen oder Augen vorgesehen sein, die am Grundkörper angeformt sind und in die das Band eingehängt werden kann.

Klemmschellen der hier in Rede stehenden Art bestehen regelmäßig aus Kunststoff und werden im Spritzgießverfahren hergestellt.

Ein Ausführungsbeispiel der Erfindung ist in der Zeichnung dargestellt und wird im folgenden näher erläutert. Es zeigen:

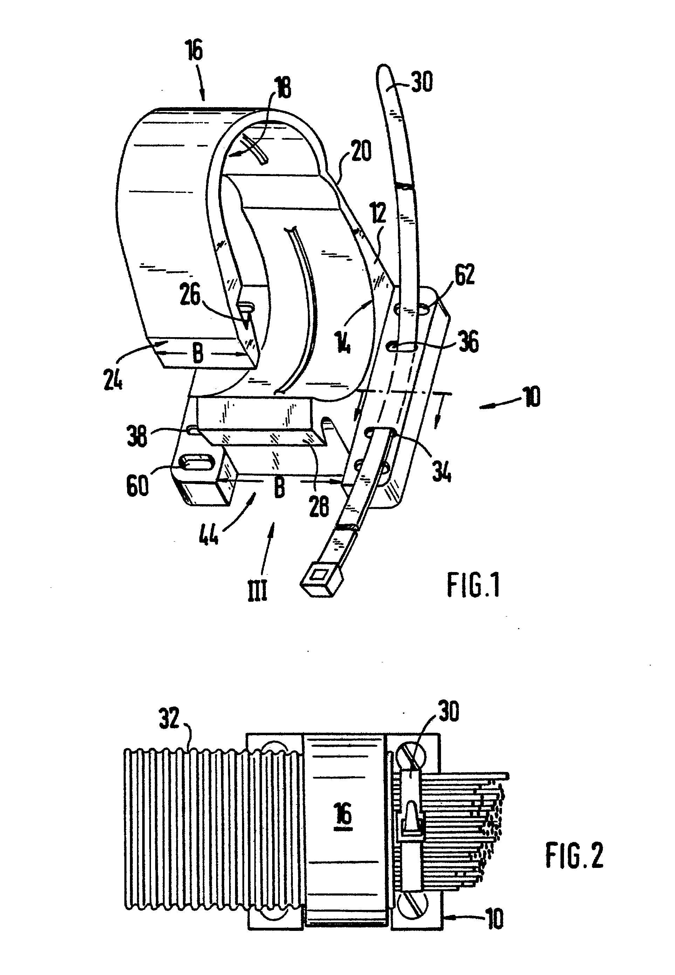

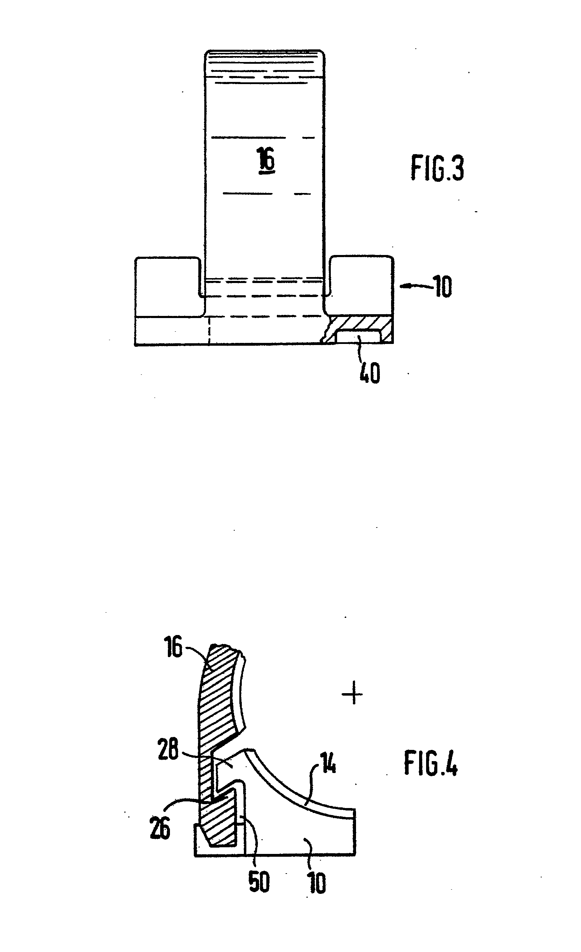

Fig. 1 eine Zentralperspektive einer Klemmschelle ohne Schlauch,

Fig. 2 eine vertikale Draufsicht auf eine Klemmschelle im wirksamen Zustand mit einem Schlauch mit Kabeln,

Fig. 3 eine Seitenansicht in Richtung des Pfeiles III nach Fig. 1 mit einem teilweise geschnittenen Bereich und

Fig. 4 die Verbindung zwischen dem Bügel und dem Arm im Bereich der Rastkupplung, wobei der Bügel in diesem Bereich im Querschnitt dargestellt ist.

Aus den Fig. geht eine lösbare Klemmschelle für Schläuche oder dgl. mit einem z.B. an eine Wand befestigbaren Grundkörper 10 hervor, der einen angeformten Arm 12 mit einer mit dem Schlauch zusammenarbeitenden konkaven Partie 14 besitzt. Ferner besitzt die Klemmschelle einen Bügel 16 mit einer mit dem Schlauch zusammenarbeitenden konkaven Partie 18. Dieser Bügel ist mit dem Arm gelenkig verbunden, und zwar mittels eines Filmscharnieres 20. Das freie Ende des Bügels 16 besitzt eine Rastkupplung 24 mit Haken 26. Diese Kupplung ist mit einer Rastkupplung 28 des Armes 12 lösbar verbindbar. Seitlich von der konkaven Partie 14 des Armes 12, in Richtung des nicht näher dargestellten Schlauches ist mindestens ein mit der Klemmschelle fest verbindbares Band 30 angeordnet, das in seinem wirksamen Zustand mit den Kabeln 100 fest verbunden ist (vgl. Fig. 2). Das Endstück des Schlauches 32 ist zwischen dem Bügel 16 und dem Arm 12 gehalten.

Im Grundkörper 10 sind Durchbrüche 34, 36 und 38 für das Band 30 ausgebildet, die zu der konkaven Partie 14 des Armes 12 hin offen sind. Die der nicht näher dargestellten Wand zugewandte Partie des Grundkörpers 10 besitzt eine Ausnehmung 40, in welche die beiden Durchbrüche 34, 36 ausmünden. Man erkennt, daß die Ausnehmung 40 etwa quaderförmig ist, wobei ihre Tiefe größer ist als die Dicke oder Breite des Bandes 30.

Im Bereich seiner Rastverbindung 28 besitzt der Körper 10 eine Ausnehmung 44, in der die Rastverbindung 24 samt Haken 26 des Bügels 16 im wirksamen Zustand der Klemmschelle angeordnet sind. Die Breite B der Ausnehmung 44 entspricht etwa der Breite der Haken-Partie des Bügels 16. Im übrigen ist diese Ausnehmung so ausgebildet, daß die Haken-Endpartie des Bügels 16 mit dem Grundkörper 10 formschlüssig verbindbar ist.

Im wirksamen Zustand der Klemmschelle ist zwischen dem freien Ende des Bügels 16 und dem Grundkörper 10 ein Spalt 50 ausgebildet (vgl. Fig. 4). Dieser Spalt 50 dient zum Lösen der Verbindung zwischen dem Arm und dem Bügel. In ihn kann z.B. das Ende eines Schraubenziehers eingelegt werden, wobei durch eine Schwenkbewegung des Schraubenziehers, die Rastverbindung gelöst werden kann. Die Verbindung zwischen dem Band und dem Grundkörper kann allerdings auch mittels Laschen oder Augen (nicht näher dargestellt) hergestellt werden.

Der Grundkörper 10 besitzt ferner Durchbrüche 60, 62, die zur Verbindung der Klemmschelle mit einer nicht näher dargestellten Wand dienen können.

## Patentansprüche

1. Lösbare Klemmschelle für Schläuche, in denen relativ zu ihnen bewegbare Kabel angeordnet sind, mit einem z.B. an eine Wand befestigbaren Grundkörper, der einen angeformten Arm mit einer mit dem Schlauch zusammenarbeitenden konkaven Partie besitzt, und einem Bügel mit einer mit dem Schlauch zusammenarbeitenden konkaven Partie, der mit dem Arm gelenkig verbunden ist und dessen freies Ende eine Rastkupplung mit Haken besitzt, die mit einer Rastkupplung des Armes lösbar verbindbar ist, dadurch gekennzeichnet, daß seitlich von der konkaven Partie (14) des Armes (12), in Richtung des Schlauches (32) mindestens ein mit der Klemmschelle fest verbindbares Band (30) zum festen Verbinden mit den Kabeln (100) bei vom Bügel (16) und dem Arm (12) gehaltenem Endstück des Schlauches angeordnet ist.

2. Klemmschelle nach Anspruch 1, dadurch gekennzeichnet, daß in dem Grundkörper (10) Durchbrüche (34, 36, 38) für das Band ausgebildet sind, die zu der konkaven Partie (14) des Armes (12) hin offen sind.

3. Klemmschelle nach Anspruch 1 oder 2, dadurch gekennzeichnet, daß in der der Wand zugewandten Partie des Grundkörpers (10) eine Ausnehmung ausgebildet ist, in welche die beiden Durchbrüche (34, 36) ausmünden.

4. Klemmschelle nach einem der Ansprüche 1 bis 3, dadurch gekennzeichnet, daß die Ausnehmung (40) etwa quaderförmig ist, wobei ihre Tiefe größer ist als die Dicke oder Breite des Bandes (30).

5. Klemmschelle nach einem der Ansprüche 1 bis 4, dadurch gekennzeichnet, daß der Grundkörper (10) im Bereich seiner Rastverbindung (28) eine Ausnehmung (44) besitzt, in der die Haken (26) des Bügels (16) im wirksamen Zustand der Klemmschelle angeordnet sind.

6. Klemmschelle nach einem der Ansprüche 1 bis 5, dadurch gekennzeichnet, daß die Breite (B) der Ausnehmung (44) etwa der Breite der Haken-Partie des Bügels (16) entspricht.

7. Klemmschelle nach Anspruch 6, dadurch gekennzeichnet, daß die Haken-Endpartie des Bügels (16) mit dem Grundkörper (10) formschlüssig verbindbar ist.

8. Klemmschelle nach einem der Ansprüche 1 bis 7, dadurch gekennzeichnet, daß im wirksamen Zustand der Klemmschelle zwischen dem freien Ende des Bügels (16) und dem Grundkörper (10) ein Spalt (50) ausgebildet ist.

9. Klemmschelle nach Anspruch 8, dadurch gekennzeichnet, daß der Spalt keilförmig ausgebildet ist.

10. Klemmschelle nach einem der Ansprüche 1 bis 9, dadurch gekennzeichnet, daß am Grundkörper Laschen oder Augen angeformt sind, in die das Band einhängbar ist.

## Claims

1. A releasable clip for conduits, in which are mounted cables which can move relative thereto, having a base member which may be secured, e.g. to a wall, a shaped arm having a concave portion matching the conduit and a U-shaped member having a concave portion matching the conduit which is flexibly linked with the arm and the free end of which has a clip connection with a catch which can be releasably connected to a clip connection of the arm, characterised in that at least one strap (30) for firm attachment to the cables (100) when the end piece of the conduit is held by the U-shaped member (16) and the arm (12), which can be firmly secured to the clip, is provided alongside the concave portion (14) of the arm (12) in the direction of the conduit (32).

2. A clip according to claim 1, characterised in that the openings (34, 36, 38) are provided for the strap in the base member (10), and are open to the concave portion (14) of the arm (12).

3. A clip according to claim 1 or 2, characterised in that a recess is provided in the portion of the base member (10) which faces the wall, into which the two openings (34, 36) open.

4. A clip according to one of claims 1 to 3, characterised in that the recess (40) is substantially rectangular, and that its depth is greater than the thickness or width of the strap (30).

5. A clip according to one of claims 1 to 4, characterised in that the base member (10) has a recess (44) in the vicinity of its snap connection (28) in which the catch (26) of the U-shaped member (16) fits when the clip is in its operating condition.

6. A clip according to one of claims 1 to 5, characterised in that the width (B) of the recess (44) substantially corresponds to the width of the catch portion of the U-shaped member (16).

7. A clip according to claim 6, characterised in that the catch end portion of the U-shaped member (16) can be interlockably connected with the base member (10).

8. A clip according to one of claims 1 to 7, characterised in that when the clip is in its operating condition a slot (50) is formed between the free end of the U-shaped member (16) and the base member (10).

9. A clip according to claim 8, characterised in that the slot is of wedge-shaped construction.

10. A clip according to one of claims 1 to 9, characterised in that mountings or eyes in which the strap may be mounted are formed on the base member.

## Revendications

1. Collier de serrage pour tubes ou tuyaux flexibles, dans lesquels sont disposés des fils ou câbles électriques mobiles par rapport à ces derniers, ce collier comportant un corps de base susceptible d'être fixé par exemple à une paroi et possédant un bras qui est formé sur lui, comporte une partie concave coopérant avec le tube ou tuyau flexible, et une boucle comportant une partie concave coopérant avec le tuyau ou tube flexible, boucle qui est reliée au bras de façon articulée, et dont l'extrémité libre comporte un accouplement par encliquetage muni d'un crochet, qui peut être relié, de façon détachable, à un accouplement par encliquetage du bras, collier caractérisé en ce que, sur le côté de la partie concave (14) du bras (12) se trouve disposé, en direction du tube ou tuyau (32), au moins un lien (30) susceptible d'être relié solidement au collier de serrage, destiné à lier solidement les fils ou câbles électriques (100), la boucle (16) et le bras (12) maintenant la partie d'extrémité du tuyau ou tube flexible.

2. Collier de serrage selon la revendication 1, caractérisé en ce que, dans le corps (10) de base sont formés des passages (34, 36, 38) pour le lien, lesquels sont ouverts en direction de la partie concave (14) du bras (12).

3. Collier de serrage selon la revendication 1 ou 2, caractérisé en ce que, dans la partie du corps (10) de base dirigée vers la paroi, est formé un creux dans lequel débouchent les deux passages (34, 36).

4. Collier de serrage selon une des revendications 1 à 3, caractérisé en ce que le creux (40) est approximativement en forme de parallélépipède, sa profondeur étant supérieur à l'épaisseur ou largeur du lien (30).

5. Collier de serrage selon une des revendications 1 à 4, caractérisé en ce que, le corps (10) de base possède dans la zone de son accouplement (28) par encliquetage, un creux (44) dans lequel sont disposés, en situation de service, les crochets (26) de la boucle (16).

6. Collier de serrage selon une des revendications 1 à 5, caractérisé en ce que, la largeur (B) du creux (44) correspond approximativement à la largeur de la partie formant crochet de la boucle (16).

7. Collier de serrage selon la revendication 6, caractérisé en ce que, la partie d'extrémité formant crochet de la boucle (16) peut être reliée par coopération ou concordance de formes au corps (10) de base.

8. Collier de service selon une des revendications 1 à 7, caractérisé en ce, qu'en situation de service du collier de serrage, une fente (50) est formée entre l'extrémité libre de la boucle (16) et le corps (10) de base.

9. Collier de serrage selon la revendication 8, caractérisé en ce, que la fente est en forme de coin.

10. Collier de serrage selon une des revendications 1 à 9, caractérisé en ce que, sur le corps de base sont formées des pattes ou des œillets, auxquels on peut accrocher le lien.

FIG.1

FIG.2

**FIG.3**

**FIG.4**